# EUROPÄISCHE PATENTANMELDUNG

(11) **EP 4 745 787 A1**
(43) Veröffentlichungstag der Anmeldung: **20.05.2026**
(21) Anmeldenummer: 25216993.3
(22) Anmeldetag: 19.11.2025
(51) Int. Cl.: G06F 11/3668

(54) **VERFAHREN ZUM TESTEN EINES COMPUTERPROGRAMMS**

(30) Priorität: 19.11.2024 DE 102024133801
(71) Anmelder: Deutsches Zentrum für Luft- und Raumfahrt e.V., 53227 Bonn-Oberkassel (DE)
(72) Erfinder: Goetz, Marie, 38104 Braunschweig (DE); Zaeske, Wanja, 38104 Braunschweig (DE)
(74) Vertreter: Gramm, Lins & Partner Patent- und Rechtsanwälte PartGmbB

(57) **Zusammenfassung**

Die Erfindung betrifft ein Verfahren zum Testen eines Computerprogramms mit einer graphischen Benutzeroberfläche, wobei eine Testumgebung zum Testen eines Systemverhaltens des zu testenden Computerprogramms mit Bedienung wenigstens eines Bedienelementes der graphischen Benutzeroberfläche bereitgestellt wird, wobei der Testumgebung über die Anzeigeschnittstelle der Datenverarbeitungseinrichtung zusätzlich zu dem ersten Bilddatenstrom für die Anzeigevorrichtung ein zweiter Bilddatenstrom bereitgestellt wird, wobei mittels einer optischen Zeichenerkennung in der über den zweiten Bilddatenstrom bereitgestellten graphischen Benutzeroberfläche durch eine Eingabevorrichtung bedienbare Bedienelemente als ein Objekt der graphischen Benutzeroberfläche erkannt werden, wobei zumindest die in der graphischen Benutzeroberfläche erkannten bedienbaren Bedienelemente als Eingabedaten in ein mit der Testumgebung über eine Datenschnittstelle verbundenes großes Sprachmodell mit der Maßgabe eingegeben werden, eine Handlungsoption für die Bedienung wenigstens eines Bedienelementes der graphischen Benutzeroberfläche an der Datenschnittstelle zu erhalten, wobei ein Eingabesignal durch die Testumgebung in Abhängigkeit von der an der Datenschnittstelle bereitgestellten Handlungsoption zum Bedienen mindestens eines erkannten Bedienelementes generiert wird, und wobei das generierte Eingabesignal an der Eingabeschnittstelle der Datenverarbeitungsanlage bereitgestellt wird, um eine simulierte Benutzereingabe zum Testen des Computerprogramms auszulösen.

## Beschreibung

Die Erfindung betrifft ein Verfahren zum Testen eines Computerprogramms, welches eine Ausgabe in Form einer graphischen Benutzeroberfläche erzeugt und auf einer Anzeigevorrichtung ausgibt.

Ein wichtiger Schritt bei der Entwicklung eines Computerprogrammes ist das Testen der spezifizierten Funktionalität. Dabei muss nicht nur überprüft werden, ob das Computerprogramm richtige Berechnungen anstellt und somit beispielsweise in sicherheitskritischen Umgebungen die notwendigen und vor allem korrekten Ausgabedaten liefert, sondern auch die Interaktion zwischen dem Benutzer und der Maschine. Diese Mensch-Maschine-Schnittstelle wird heutzutage durch graphische Benutzeroberflächen bereitgestellt, die es dem Menschen ermöglicht, interaktiv mit der Maschine zu interagieren.

Bei einer solchen Mensch-Maschine-Schnittstelle in Form einer graphischen Benutzeroberfläche werden dabei nicht nur Informationen in Form von statischen oder dynamischen Daten angezeigt, sondern auch die Möglichkeit geschaffen, mithilfe geeigneter Eingabemittel, wie beispielsweise eine Maus, eine Tastatur und/oder sensitives Touchdisplay, mit der graphischen Benutzeroberfläche zu interagieren, umso Eingaben in das Computerprogramm zu tätigen. Solche Eingaben können beispielsweise durch Auswahl vordefinierter Daten oder durch freies Eingeben von Zeichenketten erfolgen.

Nur wenn sowohl funktional die gewünschten Prozesse in der graphischen Benutzeroberfläche abgebildet werden und gleichzeitig auch eine Nutzung durch den Menschen effektiv und effizient erfolgen kann, erfüllt die Benutzeroberfläche ihren Zweck und minimiert Fehleingaben und Fehlbedienungen.

Insbesondere bei der Entwicklung sicherheitskritischer Schnittstellen, wie sie beispielsweise in der Luftfahrt sowie in der Raumfahrt häufig zu finden sind, besteht ein Problem beim Testen der Software darin, dass die Benutzerbedürfnisse, Umgebungsbedingungen und Systemfunktionalitäten den Experten in den jeweiligen Branchen sehr detailliert bekannt sind, diese jedoch keine Expertise im Bereich Softwareentwicklung und Softwaretesten besitzen. Der Softwareentwickler jedoch hat keine fundierten Kenntnisse über die Problemstellungen in der jeweiligen Branche und kennt auch die Umgebungsparameter für die jeweilige sicherheitskritische Schnittstelle nur unzureichend. Es ist daher gewünscht, dass beide Berufsgruppen ihre jeweiligen Kenntnisse und Expertise uneingeschränkt nutzen können, ohne sich auf das jeweilige andere Tätigkeitsfeld vertieft einarbeiten zu müssen.

So lässt sich beispielsweise in der Praxis beobachten, dass die meisten Fehler und schlechte Bedienbarkeit bei der Entwicklung neuartiger graphischer Benutzerschnittstellen für Piloten eines Verkehrsflugzeuges von den ersten zwei bis drei Piloten sofort erkannt werden, wodurch die Anzahl der Feedback-Schleifen erhöht und die Akzeptanz bei den Piloten für die Einführung neuartiger Softwareprodukte verringert wird. Darüber hinaus werden hierdurch die Kosten für die Entwicklung und Einführung neuer Softwarekomponenten erhöht.

Es ist in der Praxis bekannt, Software in der Entwicklung automatisch zu testen. Hierfür werden in den Programmcode der zu entwickelnden Software entsprechende, nur für den Ablauf von Testszenarien notwendige Programmelemente integriert, die für die eigentliche zu entwickelnde Software von keinem Nutzen sind. Anschließend können Testszenarien programmiert werden, die dann auf die integrierten Programmelemente zugreifen und hierdurch vorprogrammierte Programmtests durchführen.

Nachteil hierbei ist, dass für das Erstellen der Testszenarien entsprechende Programmelemente hart in den Programmcode integriert werden müssen, was bereits während der Entwicklung des Computerprogramms geschehen muss, wodurch das Entwickeln der Testszenarien auf diese Programmelemente beschränkt sind. Außerdem kann das Erstellen eines Testszenarios nur durch die Programmentwickler erfolgen, sodass die Expertise anderer Berufsgruppen, wie beispielsweise Piloten oder Auftraggeber, sich nur schwer in das Erstellen der Testszenarios integrieren lässt.

Ein weiterer Nachteil dieser Vorgehensweise ist, dass dieser für das spätere Programm nutzloser (toter) Test-Code, der in dem finalen Computerprogramm verbleibt, durch viele Sicherheitsstandards verboten ist oder zusätzlichen Absicherungsmaßnahmen erzwingt. Wenn dieser Test-Code aber nur zum Testen, nicht aber für den Produktivbetrieb einkompiliert wird, so wird nicht genau die Software getestet, die später ausgeliefert wird. Es ergibt sich ein unlösbarer Konflikt: entweder, man hat toten Code zur Laufzeit, oder man führt Tests nicht auf genau der Software aus, die letzten Endes in den Produktivbetrieb geht.

Es ist daher Aufgabe der vorliegenden Erfindung ein verbessertes Verfahren zum Testen von Computerprogrammen anzugeben, mit dem auf das Einfügen von Programmelementen in den Programmcode ausschließlich zum Zweck des Erstellens von Testszenarien verzichtet werden kann.

Die Aufgabe wird mit dem Verfahren gemäß Anspruch 1 erfindungsgemäß gelöst. Vorteilhafte Ausgestaltungen der Erfindung finden sich dann in den entsprechenden Unteransprüchen.

Gemäß Anspruch 1 wird ein Verfahren zum Testen eines Computerprogramms mit einer graphischen Benutzeroberfläche vorgeschlagen, wobei das Verfahren gattungsgemäß die folgenden Schritte umfasst:
- Bereitstellen einer Datenverarbeitungsanlage, die eine elektronische Recheneinheit, eine Anzeigeschnittstelle, über die eine Anzeigevorrichtung verbunden oder verbindbar ist, und eine Eingabeschnittstelle hat, über die eine Eingabevorrichtung für Benutzereingaben verbunden oder verbindbar ist;
- Ausführen des zu testenden Computerprogramms auf der Datenverarbeitungsanlage, wobei durch das Computerprogramm an der Anzeigeschnittstelle der Datenverarbeitungsanlage kontinuierlich ein Bilddatenstrom mit einer eine Mehrzahl von Objekten aufweisende graphische Benutzeroberfläche bereitgestellt wird.

Erfindungsgemäß ist nun vorgesehen, dass eine Testumgebung zum Testen eines Systemverhaltens des zu testenden Computerprogramms mit Bedienung wenigstens eines Bedienelementes der graphischen Benutzeroberfläche bereitgestellt wird,
- wobei der Testumgebung über die Anzeigeschnittstelle der Datenverarbeitungseinrichtung zusätzlich zu dem ersten Bilddatenstrom für die Anzeigevorrichtung ein zweiter Bilddatenstrom bereitgestellt wird,
- wobei mittels einer optischen Zeichenerkennung in der über den zweiten Bilddatenstrom bereitgestellten graphischen Benutzeroberfläche durch eine Eingabevorrichtung bedienbare Bedienelemente als ein Objekt der graphischen Benutzeroberfläche erkannt werden,
- wobei zumindest die in der graphischen Benutzeroberfläche erkannten bedienbaren Bedienelemente als Eingabedaten in ein mit der Testumgebung über eine Datenschnittstelle verbundenes großes Sprachmodell mit der Maßgabe eingegeben werden, eine Handlungsoption für die Bedienung wenigstens eines Bedienelementes der graphischen Benutzeroberfläche an der Datenschnittstelle zu erhalten,
- wobei ein Eingabesignal durch die Testumgebung in Abhängigkeit von der an der Datenschnittstelle bereitgestellten Handlungsoption zum Bedienen mindestens eines erkannten Bedienelementes generiert wird, und
- wobei das generierte Eingabesignal an der Eingabeschnittstelle der Datenverarbeitungsanlage bereitgestellt wird, um eine simulierte Benutzereingabe zum Testen des Computerprogramms auszulösen.

Demnach wird zunächst eine Datenverarbeitungsanlage bereitgestellt, auf der das zu testende Computerprogramm ausgeführt werden soll. Wenn das Computerprogramm auf der Datenverarbeitungsanlage ausgeführt wird, entsteht somit ein SuT, d. h. ein "System unter Test". Die Datenverarbeitungsanlage weist gattungsgemäß eine elektronische Recheneinheit auf, die unter anderem eine zentrale Verarbeitungseinheit (CPU) hat, mit der das Computerprogramm ausgeführt wird. Des Weiteren können/werden an die Datenverarbeitungsanlage über entsprechende Schnittstellen Peripheriegeräte angeschlossen, um Eingaben für die elektronische Recheneinheit bereitzustellen und Ausgaben auf einer Anzeigevorrichtung auszugeben. Hierfür hat die Datenverarbeitungsanlage eine Anzeigeschnittstelle, der entsprechende Bilddaten bereitgestellt werden können, um diese auf einer mit der Anzeigeschnittstelle verbundenen Anzeigevorrichtung auszugeben. Des Weiteren hat die Datenverarbeitungsanlage eine Eingabeschnittstelle, um über diese entsprechende Eingaben einer Eingabevorrichtung (beispielsweise Maus, Tastatur, Touchscreen, etc.) zu empfangen und an die elektronische Recheneinheit weiterzuleiten. Die Eingaben werden dabei von dem Computerprogramm verarbeitet, woraufhin die Ausgaben auf der Anzeigevorrichtung (beispielsweise Display) ausgegeben und gegebenenfalls angepasst werden.

Um das Computerprogramm nun zu testen, wird dieses auf der Datenverarbeitungsanlage ausgeführt, wodurch an der Anzeigeschnittstelle der Datenverarbeitungsanlage kontinuierlich ein Bilddatenstrom bereitgestellt wird, der dann als graphische Benutzeroberfläche auf der Anzeigevorrichtung angezeigt werden kann. Dieser Bilddatenstrom wird beispielsweise mit einer vorgegebenen Bildwiederholungsfrequenz bereitgestellt, vorzugsweise mit einer Frequenz der Anzeigevorrichtung. Es ist jedoch nicht zwingend erforderlich, dass tatsächlich eine Anzeigevorrichtung an der Anzeigeschnittstelle verbunden ist, um das Verfahren auszuführen. Es ebenfalls nicht zwingend erforderlich, dass tatsächlich eine Eingabevorrichtung an der Eingabeschnittstelle verbunden ist, um das Verfahren auszuführen.

Das zu testende Computerprogramm weist dabei besonders bevorzugterweise keine Programmelemente auf, die eine Schnittstelle bilden, um mithilfe eines weiteren Testprogramms das Computerprogramm zu testen. Vielmehr wird das Computerprogramm erfindungsgemäß mit dem nachstehenden Ablauf getestet.

Zunächst wird eine Testumgebung bereitgestellt, die das zu testende Computerprogramm testen soll. Diese Testumgebung kann dabei ebenfalls ein Computerprogramm sein, welches beispielsweise auf der Datenverarbeitungsanlage ausgeführt wird. Die Testumgebung ist dabei so ausgebildet, dass sie ein Systemverhalten des zu testenden Computerprogramms einschließlich einer Bedienung wenigstens eines Bedienelementes der graphischen Benutzeroberfläche enthält.

Der Testumgebung wird ein zweiter Bilddatenstrom bereitgestellt, der von der Anzeigeschnittstelle der Datenverarbeitungseinrichtung abgegriffen werden kann. Dieser zweite Bilddatenstrom ist dabei parallel zu dem ersten Bilddatenstrom, der an die Anzeigevorrichtung zur Darstellung der graphischen Benutzeroberfläche gesendet wird. Die Testumgebung erhält somit eine Kopie der aktuellen Darstellung auf der Anzeigevorrichtung, vorzugsweise mit derselben Frequenz.

Als Nächstes wird mithilfe einer optischen Zeichenerkennung die grafische Benutzeroberfläche, die der Testumgebung über den zweiten Bilddatenstrom bereitgestellt wurde, analysiert. Neben dem Erkennen von statischen Informationen (Datenfelder, Labels, etc.) sollen hier insbesondere bedienbare Bedienelemente (Buttons, DropDown-Menüs, Textfelder, Checkboxen, etc...) erkannt werden, insbesondere jene Bedienelemente, die für das zu testende Systemverhalten relevant sind und somit Teil der Definition des Systemverhaltens sind. Es werden dabei nicht nur die Bedienelemente an sich erkannt, sondern insbesondere auch deren Position innerhalb der graphischen Benutzeroberfläche, was mithilfe eines zweidimensionalen Koordinatendatums abgebildet werden kann.

Die optische Zeichenerkennung kann dabei derart hergerichtet sein, dass sie im Vorfeld einen Kontext erhält, welche Objekte und insbesondere welche die Objekte kennzeichnenden Zeichenketten identifiziert werden sollen und ggf. welche Eigenschaften diese Objekte besitzen.

Demnach wird mittels der optischen Zeichenerkennung in der über den zweiten Bilddatenstrom bereitgestellten graphischen Benutzeroberfläche durch die Eingabevorrichtung bedienbare Bedienelemente in Abhängigkeit von den in dem zu testenden Systemverhalten enthaltenen Bedienelementen erkannt.

Zumindest diese erkannten Bedienelemente werden nun als Eingabe in großes Sprachmodell mit der Maßgabe eingegeben, eine Handlungsoption für die Bedienung wenigstens eines dieser Bedienelemente zu erhalten. Hierfür hat die Testumgebung eine Datenschnittstelle, über die die Testumgebung mit dem großen Sprachmodell verbunden ist. Das große Sprachmodell kann Bestandteil der Testumgebung sein, kann aber auch lediglich über die Datenschnittstelle mit einem solchen externen großen Sprachmodell verbunden sein.

Die Maßgabe, eine entsprechende Handlungsoption zu erhalten, leitet sich dabei aus dem spezifizierten Systemverhalten des zu testenden Computerprogramms ab.

An der Datenschnittstelle wird nach Eingabe der erkannten Bedienelemente als Eingabedaten mindestens eine Handlungsoption für die Bedienung wenigstens eines der Bedienelemente bereitgestellt, wobei sich diese Handlungsoption als Ausgabe aus dem großen Sprachmodell ergibt. Das große Sprachmodell liefert demnach aus der Eingabe der erkannten Bedienelemente eine entsprechende Handlungsoption als Ausgabe, wobei eine solche Handlungsoption die Bedienung eines der Bedienelemente umfasst.

Basierend auf der an der Datenschnittstelle bereitgestellten Handlungsoption zum Bedienen mindestens eines der erkannten Bedienelemente wird durch die Testumgebung nun ein Eingabesignal generiert, welches an der Eingabeschnittstelle der Datenverarbeitungsanlage bereitgestellt wird. Durch die Bereitstellung eines solchen künstlich generierten Eingabesignal an der Eingabeschnittstelle der Datenverarbeitungsanlage wird eine simulierte Benutzereingabe zum Testen des Computerprogramms ausgelöst, wodurch ein entsprechendes Systemverhalten des

Das generierte Eingabesignal entspricht dabei einem Signal einer Eingabevorrichtung, mit der Eingaben in die Datenverarbeitungsanlage ausgelöst werden können. Dieses Eingabesignal kann dabei der Eingabeschnittstelle der Datenverarbeitungsanlage bereitgestellt werden, um so eine Eingabe zu generieren. Das generierte Eingabesignal stammt aber nicht von einer tatsächlichen Eingabevorrichtung (beispielsweise Maus oder Tastatur), sondern wurde virtuell generiert und wird nun der Eingabeschnittstelle der Datenverarbeitungsanlage bereitgestellt, um so eine simulierte Benutzereingabe zum Testen des Computerprogramms auszulösen.

Durch das generierte Eingabesignal wird somit die Bedienung des Bedienelementes auf der graphischen Benutzeroberfläche simuliert, ohne dass tatsächlich eine Eingabe durch die Eingabevorrichtung durch einen physischen Benutzer notwendig wird. Vielmehr erfolgt die Bedienung des Bedienelementes rein aus der Testumgebung heraus durch das Bereitstellen des generierten Eingabesignals an der Eingabeschnittstelle.

Durch die simulierte Bedienung des Bedienelementes auf der graphischen Benutzeroberfläche wird eine Reaktion des Computerprogramms ausgelöst, die zu einer Veränderung der graphischen Benutzeroberfläche führt. In einem zeitlichen nachgelagerten Schritt kann dann durch Analyse des zweiten Bilddatenstroms die sich veränderte grafische Benutzeroberfläche wieder analysiert werden und mit dem spezifizierten Systemverhalten in dem Testszenario verglichen werden, um so festzustellen, ob sich das Computerprogramm gemäß dem spezifizierten Testszenario verhält oder nicht.

Mithilfe der vorliegenden Erfindung wird es somit möglich, ein Computerprogramm (SuT) zu testen, ohne entsprechende Programmelemente in das Computerprogramm integrieren zu müssen. Vielmehr kann das Computerprogramm ohne Rücksicht darauf entwickelt werden, wobei die Spezifikation des Testszenarios dann von Personen mit der entsprechenden Expertise durchgeführt wird, ohne dass Kenntnisse vom Testen solcher Computerprogramme erforderlich sind.

Hierdurch lassen sich Kosten bei der Entwicklung der Computerprogramme reduzieren und gleichzeitig grafische Benutzeroberflächen zu einem frühestmöglichen Zeitraum testen, ohne dass diese dann in einem Betatest im Feld durch die entsprechenden späteren Anwender getestet werden müssen. Hierdurch reduziert sich die Anzahl der Feedback-Schleifen, wodurch der Änderungsaufwand reduziert und die Akzeptanz der Software erhöht wird.

Große Sprachmodelle sind Sprachmodelle, die Texte aus natürlicher Sprache zum Teil auch hinsichtlich der Semantik analysieren können. Diese werden mithilfe großer Datenmengen gelernt, insbesondere mit Texten aus natürlicher Sprache. Dem großen Sprachmodell werden dabei die erkannten Zeichenketten bereitgestellt, wobei das große Sprachmodell dann eine Handlungsoption für die Bedienung eines der erkannten Bedienelemente ausgibt.

Ein solches großes Sprachmodell kann dabei ein künstliches neuronales Netz zugrunde gelegt werden, welches mit entsprechenden Datenmengen gelernt wurde. Ein solches großes Sprachmodell kann dabei beispielsweise genauso gelernt worden sein wie die bekannten LLMs, die bspw. unter dem Handelsnamen "ChatGPT" oder "OpenAI" bekannt sind. Bei dem großen Sprachmodell handelt es sich um ein computerlinguistisches Wahrscheinlichkeitsmodell, das statistische Wort- und Satzfolgebeziehungen aus einer Vielzahl von Textdokumenten durch einen Trainingsprozess erlernt.

Dabei können einzelne Wörter, Wortgruppen oder ein gesamtes Testszenario als Eingabedaten in das große Sprachmodell eingegeben werden sowie ein oder mehrere erkannte Zeichenketten der graphischen Benutzeroberfläche, wobei das große Sprachmodell dann eine Handlungsoption liefert.

Gemäß einer Ausführungsform ist vorgesehen, dass mittels der optischen Zeichenerkennung auch ein durch Koordinaten beschreibbarer Bedienbereich des erkannten bedienbaren Bedienelementes in der bereitgestellten graphischen Benutzeroberfläche ermittelt wird, innerhalb dessen das bedienbare Bedienelement durch eine Benutzereingabe an der Eingabevorrichtung ausgelöst werden kann, wobei das Eingabesignal weiterhin in Abhängigkeit von dem durch ermittelten Bedienbereich generiert wird.

Hierdurch wird nicht nur das Bedienelement als solches identifiziert, sondern auch der bedienbare Bereich, innerhalb dessen das Bedienelement auf der graphischen Benutzeroberfläche bedient und somit eine Aktion ausgelöst werden kann. Der bedienen Bereich ist dabei vorzugsweise ein zweidimensionaler Bereich, der durch die Fläche und Position innerhalb der graphischen Benutzeroberfläche definiert wird.

Gemäß einer Ausführungsform ist vorgesehen, dass die Testumgebung auf der Datenverarbeitungsanlage oder auf einer mit der Datenverarbeitungsanlage verbundenen externen Vorrichtung ausgeführt wird.

Bei der Testumgebung handelt es sich um ein zu dem zu testenden Computerprogramm separates, zweites Computerprogramm, welches auf einer Datenverarbeitungsanlage ausgeführt wird und das zu testende Computerprogramm testet. Die Testumgebung kann somit auf der Datenverarbeitungsanlage ausgeführt werden, auf der auch das zu testende Computerprogramm ausgeführt wird. Denkbar ist aber auch, dass die Testumgebung auf einer separaten, zweiten Datenverarbeitungsanlage ausgeführt wird und mit der ersten

Datenverarbeitungsanlage, auf der das zu testende Computerprogramm ausgeführt wird, verbunden ist. Die Verbindung ist notwendig, um an der Anzeigeschnittstelle den zweiten Bilddatenstrom abzugreifen und um über die Eingabeschnittstelle das generierte Eingabesignal der ersten Datenverarbeitungsanlage bereitzustellen, sodass eine simulierte Benutzereingabe ausgelöst werden kann.

Gemäß einer Ausführungsform ist vorgesehen, dass mittels der optischen Zeichenerkennung in der über den zweiten Bilddatenstrom bereitgestellten graphischen Benutzeroberfläche dargestellte Informationen als Objekte erkannt werden, wobei die in der graphischen Benutzeroberfläche erkannten Informationen ebenfalls über die Datenschnittstelle in das große Sprachmodell mit der Maßgabe eingegeben werden, eine Handlungsoption für die Bedienung wenigstens eines Bedienelementes der graphischen Benutzeroberfläche an der Datenschnittstelle zu erhalten.

Hierdurch lassen sich insbesondere statische Informationen, die auf der graphischen Benutzeroberfläche angezeigt werden und sich während der Ausführung des Computerprogramms nicht oder nur aufgrund einer Bedienung ändern, mit den Angaben innerhalb des Systemverhaltens validieren. Dadurch kann sichergestellt werden, dass die grafische Benutzeroberfläche die spezifizierten Informationen anzeigt, die auch in dem Systemverhalten entsprechend angegeben sind.

Diese dargestellten Informationen werden dabei zusätzlich zu den erkannten Bedienelementen der graphischen Benutzeroberfläche als Eingabedaten dem großen Sprachmodell übergeben, sodass das große Sprachmodell über einen weiteren Kontext der graphischen Benutzeroberfläche verfügt und so gezielter Handlungsoptionen bereitstellen kann.

Gemäß einer Ausführungsform ist vorgesehen, dass die Testumgebung wenigstens ein Testszenario hat, welches ein Systemverhalten des zu testenden Computerprogramms mit Bedienung wenigstens eines Bedienelementes der graphischen Benutzeroberfläche beinhaltet, wobei in Abhängigkeit von dem Testszenario mindestens eine Anweisung an das große Sprachmodell generiert und diese ebenfalls über die Datenschnittstelle in das große Sprachmodell eingegeben wird, um eine Handlungsoption für die Bedienung wenigstens eines Bedienelementes der graphischen Benutzeroberfläche an der Datenschnittstelle zu erhalten.

In einem solchen Testszenario kann dabei das Systemverhalten durch entsprechende an das Computerprogramm beschrieben werden und dabei nicht nur die Bedienung wenigstens eines Bedienelementes beinhalten, sondern auch die erwartete Darstellung. Diese Definition in dem Testszenario kann dabei vorzugsweise mit natürlicher Sprache erfolgen, sodass sich hieraus entsprechende Anweisungen generieren lassen, die dann als weitere Eingabedaten in das große Sprachmodell eingegeben werden. Im einfachsten Fall kann dabei vorgesehen sein, dass die Definitionen in dem Testszenario 1 zu 1 in das große Sprachmodell übertragen werden.

Gemäß einer Ausführungsform hierzu ist vorgesehen, dass nach dem Auslösen der simulierten Benutzereingabe ein geänderter zweiter Bilddatenstrom mit einer geänderten graphischen Benutzeroberfläche bereitgestellt wird, wobei mittels der optischen Zeichenerkennung Objekte in der geänderten graphischen Benutzeroberfläche erkannt werden und wobei die geänderte graphische Benutzeroberfläche hinsichtlich des im Testszenario beschriebenen Systemverhaltens in Abhängigkeit von den erkannten Objekten verifiziert wird.

Dabei kann vorgesehen sein, dass die Schritte bis zur Auslösung der simulierten Benutzereingabe mehrfach wiederholt werden, wobei jeder Wiederholung die jeweils zuvor geänderte graphische Benutzeroberfläche aus einer vorherigen simulierten Benutzereingabe berücksichtigt wird.

In diesem Fall wird die grafische Benutzeroberfläche nach dem Auslösen der Benutzereingabe durch eine simulierte Bedienung des Bedienelementes, welches in dem Testszenario spezifiziert ist, verändert, was eine Reaktion auf die Bedienung des Bedienelementes ist. Diese Veränderung der graphischen Benutzeroberfläche nach der simulierten Bedienung des Bedienelementes wird dann durch die Analyse mittels der optischen Zeichenerkennung und dem in dem Testszenario spezifizierten Systemverhalten validiert.

Hierdurch wird ein vollständiger Test mit Voraussetzung, Bedienung und Reaktion möglich, ohne dass das Computerprogramm entsprechende Integrierte Programmelement benötigt.

Gemäß einer Ausführungsform ist vorgesehen, dass mittels der optischen Zeichenerkennung zunächst Zeichenketten der in der graphischen Benutzeroberfläche enthaltenen Objekte erkannt, wobei anschließend die in dem Testszenario das Systemverhalten beschreibenden Objekte den entsprechenden Objekten innerhalb der graphischen Benutzeroberfläche in Abhängigkeit von den erkannten Zeichenketten der in der graphischen Benutzeroberfläche enthaltenen Objekte zugeordnet werden.

Hierbei wird vorzugsweise eine Zuordnung durchgeführt, bei der versucht wird, jedem in der grafischen Benutzeroberfläche erkannten Objekt einem Objekt in dem Testszenario zuzuordnen. Sowohl die Objekte in der graphischen Benutzeroberfläche als auch die Objekte in den Testszenarien sind dabei durch entsprechende Zeichenketten definiert, sodass die Zuordnung über die Zeichenketten erfolgt. Das bedeutet, dass eine in der graphischen Benutzeroberfläche erkannte Zeichenkette, die ein entsprechendes Objekt innerhalb der graphischen Benutzeroberfläche gekennzeichnet, einer Zeichenkette in dem Testszenario zugeordnet wird, die dort ein entsprechendes Objekt innerhalb des Testszenarios definiert.

Gemäß einer Ausführungsform ist vorgesehen, dass das Testszenario derart bereitgestellt wird, dass das dadurch beschriebene Systemverhalten mittels natürlicher Sprache definiert ist, wobei vorgesehen sein kann, das in natürlicher Sprache definierte Systemverhalten mittels eines Parsers in eine künstliche Beschreibung des Systemverhaltens umzusetzen, wobei die künstliche Beschreibung dann in das große Sprachmodell eingegeben wird.

Durch die Beschreibung des Systemverhaltens mittels natürlicher Sprache wird es möglich, dass das Erstellen bspw. eines Testszenarios durch jene Personen möglich wird, die in der jeweiligeren Branche Experten angesehen werden, ohne dass diese hierfür entsprechende Kenntnisse von der Entwicklung eines Computerprogramms benötigen. Der Parser ist dabei so ausgebildet, dass er das in natürlicher Sprache definierte Systemverhalten in eine künstliche Beschreibung des Systemverhaltens umsetzt, was dann durch die Testumgebung entsprechend ausgeführt wird.

Ein solches Testszenario kann beispielsweise durch Domänenexperten und Auftraggeber spezifiziert werden und können dabei aus einzelnen Schritten, die in Form von Prosa formuliert werden, bestehen. Dabei können entsprechende Präfixwörter für jeden einzelnen Schritt verwendet werden, um das Parsen des so spezifizierten Testszenario zu vereinfachen und prozesssicher zu gestalten.

Solche Testszenarios sind dann menschenlesbar und somit sowohl für den Auftraggeber als auch den Domänenexperten nachvollziehbar, ohne dass diese Kenntnis von der Programmierung haben. Dabei können auch Platzhalter verwendet werden, die in einer lokalen Variablen gespeichert werden. Der Parser übersetzt dies dann in eine maschinelle Beschreibung des Systemverhaltens, sodass das Testszenario dann durch die Testumgebung schrittweise ausgeführt werden kann. Die Erfindung wird anhand der beigefügten Figuren beispielhaft näher erläutert. Es zeigen:
- Figur 1: schematische Darstellung eines zu testenden Systems mit Testumgebung;
- Figur 2: schematische Darstellung des erfindungsgemäßen Testablaufes.

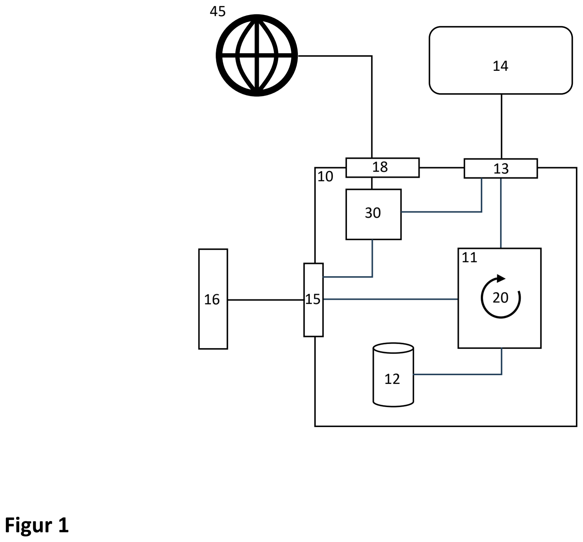

Figur 1 zeigt eine Datenverarbeitungsanlage 10, die eine elektronische Recheneinheit 11 und einen Datenspeicher 12 (volatil und non-volatil) hat. Auf der Recheneinheit 11 wird ein Computerprogramm 20 ausgeführt, welches mit den Elementen der Datenverarbeitungsanlage 10 interagiert.

Die Datenverarbeitungsanlage 10 weist einer Anzeigeschnittstelle 13 auf, über die eine Anzeigevorrichtung 14 angeschlossen ist, sodass das Computerprogramm 20 eine entsprechende grafische Ausgabe über die Anzeigeschnittstelle 13 auf der Anzeigevorrichtung 14 ausgeben kann. Eine solche grafische Ausgabe ist eine grafische Benutzeroberfläche.

Die Datenverarbeitungsanlage 10 weist des Weiteren eine Eingabeschnittstelle 15 auf, über die eine Eingabevorrichtung 16 angeschlossen ist. Mithilfe der Eingabevorrichtung 16 können dabei Eingaben für das Computerprogramm 20 generiert und diesen entsprechend bereitgestellt werden, sodass hierüber eine Interaktion mit dem Computerprogramm 20 möglich wird. Basierend auf der Interaktion und den Eingaben, die über die Eingabevorrichtung 16 erzeugt werden, kann dann die Ausgabe auf der Anzeigevorrichtung 14 entsprechend angepasst werden, was ebenfalls von Computerprogramm 20 initiiert wird. Solche Eingabevorrichtungen 16 können dabei beispielsweise eine Maus, eine Tastatur, Bedienknöpfe und/oder Touchdisplays sein.

Des Weiteren wird von der Datenverarbeitungsanlage 10 erfindungsgemäß eine Testumgebung 30 bereitgestellt, die in Figur 1 als Bestandteil der Datenverarbeitungsanlage 10 dargestellt wird. Es kann sich hierbei beispielsweise ebenfalls um ein auf der Recheneinheit 11 ablaufen des Computerprogramms handeln. Denkbar ist aber auch, dass es sich um ein externes Gerät handelt, welches über eine Schnittstelle (nicht dargestellt) mit der Datenverarbeitungsanlage 10 verbunden ist.

Die Testumgebung 30 ist dabei sowohl mit der Anzeigeschnittstelle 13 als auch mit der Eingabeschnittstelle 15 verbunden. Von der Anzeigeschnittstelle 13 erhält die Testumgebung eine Kopie des aktuellen Bilddatenstroms, der zur Anzeige auf der Anzeigevorrichtung 14 führt. Von der Eingabeschnittstelle 15 erhält die Testumgebung 30 die entsprechenden Eingaben, die an der Eingabevorrichtung 16 zur Interaktion mit dem Computerprogramm 20 eingegeben wurden.

Die Verbindung zwischen der Testumgebung 30 und der Eingabeschnittstelle 15 ist dabei bidirektional, sodass die Testumgebung 30 nicht nur eine Kopie der Eingaben von der Eingabevorrichtung 16 erhält, die an das Computerprogramm 20 weitergeleitet werden, sondern auch selber Eingabesignale an der Eingabeschnittstelle 15 bereitstellen kann, um so eine Interaktion mit dem Computerprogramm 20 auslösen zu können.

Die Testumgebung 30 ist des Weiteren über eine Datenschnittstelle 18 mit einem großen Sprachmodell 45 verbunden, um mit diesem zu interagieren und durch Eingabe von Anweisungen, Informationen und erkannten bedient Elementen eine Handlungsoption für die Bedienung des zu testenden Computerprogramms zu erhalten.

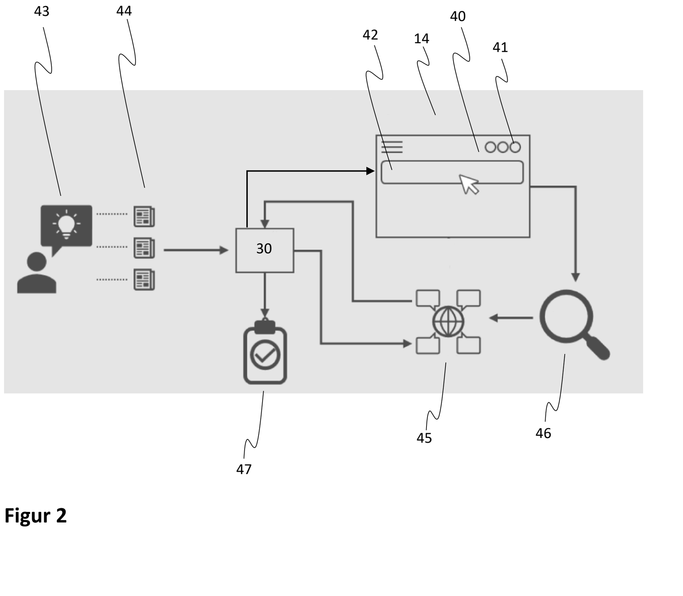

Figur 2 zeigt schematisch den durch die Testumgebung ausgeführten Verfahrensablauf am Beispiel eines Computerprogramms aus der Luftfahrt. Dieses zu testende Computerprogramm erzeugt dabei auf einer Anzeigevorrichtung 14 (siehe Figur 1) eine grafische Benutzeroberfläche 40, die hinsichtlich der Anforderungen überprüft und validiert werden soll. Diese Benutzeroberfläche weist mehrere graphische Objekte 41, 42 auf, mit denen ein Benutzer des Computerprogramms durch entsprechende Eingaben an einer Eingabevorrichtung interagieren kann. Ein solches grafisches Objekt 42 der graphischen Benutzeroberfläche 40 kann beispielsweise ein Button sein, der durch eine Maus oder ein Touchdisplay oder eine Tastenkombination bedient werden kann.

Im Ausführungsbeispiel der Figur 2 sei das grafische Objekt 42 der graphischen Benutzeroberfläche 40 ein Button, der mit der Zeichenkette "Route" gekennzeichnet ist. Wird dieses grafische Objekt 42 durch eine Eingabe bedient, so soll eine Aktion ausgeführt werden, bei der sämtlichen Wegpunkte des Flugzeugs angezeigt werden sollen.

Um dies zu testen, werden zunächst von einem Branchenexperten, Domänenexperten oder dem Auftraggeber 43 verschiedene Testszenarien 44 erzeugt, die der Testumgebung 30 bereitgestellt werden. Die Testumgebung 30 umfasst eine optische Zeichenerkennung 46 sowie einer Ausgabe 47 und ist über eine entsprechende Schnittstelle auch mit einem großen Sprachmodell 45 kommunizierend verbunden.

Die Testszenarios 44 enthalten dabei das erwartete Systemverhalten des Computerprogramms hinsichtlich seiner graphischen Benutzeroberfläche 40 und sind in Form von Prosa menschenlesbar formuliert. Ein solches Szenario könnte beispielsweise wie folgt formuliert sein:
Szenario: Zeige Route
Gegeben der Flugmanagementcomputer ist in der Hauptansicht
Wenn der Route-Button wird betätigt
Dann alle Wegepunkte werden angezeigt

Bei diesem Szenario wird überprüft, ob beim Betätigen des Route-Button die gewünschte Aktion, nämlich dass alle Wegpunkte auf dem

Flugmanagementcomputer (Flight Management Computer) angezeigt werden, von dem Computerprogramm ausgeführt wird. Die Voraussetzung für diese Aktion wird dabei in der ersten Zeile definiert, nämlich dass der Flugmanagementcomputer in der Hauptansicht ist.

Durch die bekannten Präfixe "Gegeben, Wenn, Dann" kann die Testumgebung 30 nun mithilfe eines Parsers dieses so in natürlicher Sprache formulierte Testszenario in eine maschinenlesbare Beschreibung des Systemverhaltens überführen. Hierbei werden die entsprechenden Objekte, wie beispielsweise der "Route-Button", identifiziert.

Zur Durchführung des Testablaufes wird nun das Computerprogramm gestartet, sodass die grafische Benutzeroberfläche 40 auf der Anzeigevorrichtung 14 angezeigt wird. Mithilfe der optischen Zeichenerkennung 46 wird nun diese graphische Ausgabe analysiert und entsprechenden Zeichenketten auf der graphischen Benutzeroberfläche erkannt. Diese Zeichenketten gehören dabei zu entsprechenden Objekten 41, 42 auf der graphischen Benutzeroberfläche 40, wie beispielsweise die Zeichenkette "Route" des Buttons 42. Gleichzeitig wird auch der entsprechende Bereich identifiziert, innerhalb dessen das Objekt auf Bedieneingaben reagiert.

Sowohl die erkannten Zeichenketten aus der optischen Zeichenerkennung 46 als auch Anweisungen generiert aus dem entsprechenden Testszenario, welches von der Testumgebung 30 ausgeführt wird, werden nun einem großen Sprachmodell 45 bereitgestellt, damit dieses eine entsprechende Handlungsoption ermittelt. Im oben genannten Beispiel identifiziert das große Sprachmodell 45 die Eingabe so, dass das Bedienelement mit der Bezeichnung "Route" durch eine Eingabe bedient werden soll, worauf hin sich die graphische Darstellung durch Anzeige der Wegpunkte ändern soll.

Das große Sprachmodell 45 liefert somit als Handlungsoption die Bedienung des Bedienelementes mit der Bezeichnung "Route".

Dieser Handlungsoption wird nun durch die Testumgebung 30 ausgeführt, in ein entsprechendes Eingabesignal generiert und an der entsprechenden Schnittstelle bereitgestellt wird, sodass eine simulierte Benutzereingabe ausgelöst wird.

Hierdurch verändert sich die grafische Benutzeroberfläche 40, was in einem zweiten Durchlauf ebenfalls analysiert wird. Hierfür werden die erkannten Elemente auf der graphischen Benutzeroberfläche dem großen Sprachmodell 45 zusammen mit einer entsprechend aus dem Testszenario generierten Anweisung "Wegpunkte sichtbar?" bereitgestellt, welches eine entsprechende Validierung als Antwort zurückgibt.

In einem weiteren Beispiel soll ein autonomer Prüfprozess mit expliziter Erwähnung der Dialoge zwischen der Testumgebung und dem großen Sprachmodell gezeigt werden. Das Testszenario hat dabei die Aufgabe, die Navigation zu den Koordinaten 54° Breitengrad und 10° Längengrad selbstständig auszuführen.

Das zu testende Computerprogramm befindet sich dabei nächst in einer graphischen Darstellung, die 3 Bedienelemente in Form von Buttons anzeigt: Starte Navigation, Abbrechen und Settings.

Durch die optische Zeichenerkennung werden diese 3 Knöpfe erkannt und identifiziert. Aus dem Testszenario ist die gestellte Aufgabe bekannt, sodass an das große Sprachmodell die folgende Eingabe getätigt wird:
*"Deine Aufgabe ist: Starte eine Navigation zu den Koordinaten Breite 54 und*
*Länge 10. Aktuell sind folgende Buttons sichtbar: Starte Navigation,*
*Abbrechen und Settings. "*

Es können darüber hinaus noch weitere Informationen oder Anweisungen an das große Sprachmodell übergeben werden, wie beispielsweise ergänzend:
*"Welche Button drückst du?"*

Und gegebenenfalls auch Informationen bezüglich der zu liefernden Formate:
*"Bitte antworte im JSON-Format"*

Das große Sprachmodell analysiert diese Informationen und antwortet mit einer Handlungsoption:
*"Starte Navigation"*

Die Testumgebung erkennt (z.B. unter Verwendung einer Levenshtein-Distanz), dass das große Sprachmodell einen Klick auf den Knopf "Starte Navigation" vorgeschlagen hat. Dieses Erkennen des Vorschlags vom großen Sprachmodell kann durch einen einfachen Parser in der Testumgebung realisiert werden.

Aufgrund der zuvor getätigten optischen Zeichenerkennung und der Identifizierung der Pixel-Koordinaten der jeweiligen Buttons kann die Testumgebung nun ein Eingabesignal generieren, die einen simulierten Klick auf den Knopf "Starte Navigation" auslöst. Dieses Eingabesignal wird dann an der entsprechenden Eingabeschnittstelle bereitgestellt.

Nach dem Auslösen der simulierten Benutzereingabe reagiert das zu testende Computerprogramm mit einem Wechsel der Benutzeroberfläche und die Testumgebung beginnt mit einem erneuten Durchlauf, indem es zunächst die geänderte grafische Benutzeroberfläche neu einließt und mithilfe der optischen Zeichenerkennung analysiert. In der geänderten graphischen Benutzeroberfläche sind nun zwei Textfelder zu sehen, nämlich ein erstes mit der Bezeichnung Lat. und ein zweites mit der Bezeichnung Lon.

Im nächsten Schritt kommuniziert die Testumgebung wieder mit dem großen Sprachmodell und übermittelt eine entsprechende Anweisung:
*"Die Benutzeroberfläche hat sich geändert. Es gibt folgende Textfelder: Label ,Lat' und Label ,Lon'. Was gibst du die Textfelder ein? Bitte antworte im JSON-Format. "*

Basierend auf der Zielanforderung übermittelt das große Sprachmodell die Eingabe der spezifischen Koordinaten im JSON-Format:
{"*Lat.":* "54", "*Lon*.": *"10"*}

Die Testumgebung übernimmt dieser Eingaben und platzierte Werte in die entsprechenden Textfelder.

Danach wird von der Testumgebung die Benutzeroberfläche erneut überprüft, um zu verifizieren, ob die Navigation zu den Koordinaten 54, 10 erfolgreich gestartet wurde oder ob eine weitere Interaktion notwendig ist.

Die Prosa-Texte, welche die Testumgebung an das große Sprachmodell übergibt, sowie das Interpretieren der Antwort vom großen Sprachmodell erfolgte rein maschinell und ist hochgradig standardisiert. D. h., auch wenn in den vorgenannten Beispielen Menschen verständliche Kommunikation praktiziert wird, ist keine menschliche Interaktion notwendig oder erforderlich. Der einzige einen Menschen manuell erstellte Input für den Test ist der Inhalt des Testszenarios.

Studien haben gezeigt, dass 80 % der Fehler in einer Benutzeroberfläche von den ersten drei bis vier Piloten in einer Nutzerstudie gefunden werden. Mithilfe der vorliegenden Erfindung wird es möglich, einen relevanten Anteil dieser Fehler bereits vorher aufzudecken, noch bevor kostbare Ressourcen aufgewandt werden müssen. Gleichzeitig kann die Effizienz einer Benutzerschnittstelle äquivalent zum Nutzer bestimmt werden. Dabei ist die Kopplung zwischen der zu testenden Software und der Testumgebung minimal, da kein direkter Eingriff in den Source Code der zu testenden Software notwendig ist.

### Bezugszeichenliste

10 Datenverarbeitungsanlage
11 elektronischen Recheneinheit
12 Datenspeicher
13 Anzeigeschnittstelle
14 Anzeigevorrichtung
15 Eingabeschnittstelle
16 Eingabevorrichtung
18 Datenschnittstelle
20 Computerprogramm (das zu testende)
30 Testumgebung
40 grafische Benutzeroberfläche
41 ein erstes Objekt der grafischen Benutzeroberfläche
42 ein zweites Objekt der grafischen Benutzeroberfläche
43 Ersteller des Testszenarios
44 Testszenarien
45 großes Sprachmodell
46 optische Zeichenerkennung
47 Testausgabe

## Patentansprüche

1. Verfahren zum Testen eines Computerprogramms (20) mit einer grafischen Benutzeroberfläche (40), wobei das Verfahren die folgenden Schritte umfasst:
- Bereitstellen einer Datenverarbeitungsanlage (10), die eine elektronische Recheneinheit (11), eine Anzeigeschnittstelle (13), über die eine Anzeigevorrichtung (14) verbunden oder verbindbar ist, und eine Eingabeschnittstelle (15) hat, über die eine Eingabevorrichtung (16) für Benutzereingaben verbunden oder verbindbar ist;
- Ausführen des zu testenden Computerprogramms (20) auf der Datenverarbeitungsanlage (10), wobei durch das Computerprogramm (20) an der Anzeigeschnittstelle (13) der Datenverarbeitungsanlage (10) kontinuierlich ein Bilddatenstrom mit einer eine Mehrzahl von Objekten aufweisende grafische Benutzeroberfläche (40) bereitgestellt wird;
**dadurch gekennzeichnet, dass** eine Testumgebung (30) zum Testen eines Systemverhaltens des zu testenden Computerprogramms (20) mit Bedienung wenigstens eines Bedienelementes der grafischen Benutzeroberfläche (40) bereitgestellt wird,
- wobei der Testumgebung (30) über die Anzeigeschnittstelle (13) der Datenverarbeitungseinrichtung zusätzlich zu dem ersten Bilddatenstrom für die Anzeigevorrichtung (14) ein zweiter Bilddatenstrom bereitgestellt wird,
- wobei mittels einer optischen Zeichenerkennung (46) in der über den zweiten Bilddatenstrom bereitgestellten grafischen Benutzeroberfläche (40) durch eine Eingabevorrichtung (16) bedienbare Bedienelemente als ein Objekt der grafischen Benutzeroberfläche (40) erkannt werden,
- wobei zumindest die in der grafischen Benutzeroberfläche (40) erkannten bedienbaren Bedienelemente als Eingabedaten in ein mit der Testumgebung (30) über eine Datenschnittstelle (18) verbundenes großes Sprachmodell (45) mit der Maßgabe eingegeben werden, eine Handlungsoption für die Bedienung wenigstens eines Bedienelementes der grafischen Benutzeroberfläche (40) an der Datenschnittstelle (18) zu erhalten,
- wobei ein Eingabesignal durch die Testumgebung (30) in Abhängigkeit von der an der Datenschnittstelle (18) bereitgestellten Handlungsoption zum Bedienen mindestens eines erkannten Bedienelementes generiert wird, und
- wobei das generierte Eingabesignal an der Eingabeschnittstelle (15) der Datenverarbeitungsanlage (10) bereitgestellt wird, um eine simulierte Benutzereingabe zum Testen des Computerprogramms (20) auszulösen.

2. Verfahren nach Anspruch 1, **dadurch gekennzeichnet, dass** mittels der optischen Zeichenerkennung (46) auch ein durch Koordinaten beschreibbarer Bedienbereich des erkannten bedienbaren Bedienelementes in der bereitgestellten grafischen Benutzeroberfläche (40) ermittelt wird, innerhalb dessen das bedienbare Bedienelement durch eine Benutzereingabe an einer Eingabevorrichtung (16) ausgelöst werden kann, wobei das Eingabesignal weiterhin in Abhängigkeit von dem durch ermittelten Bedienbereich generiert wird.

3. Verfahren nach Anspruch 1 oder 2, **dadurch gekennzeichnet, dass** die Testumgebung (30) auf der Datenverarbeitungsanlage (10) oder auf einer mit der Datenverarbeitungsanlage (10) verbundenen externen Vorrichtung ausgeführt wird.

4. Verfahren nach einem der vorhergehenden Ansprüche, **dadurch gekennzeichnet, dass** mittels der optischen Zeichenerkennung (46) in der über den zweiten Bilddatenstrom bereitgestellten grafischen Benutzeroberfläche (40) dargestellte Informationen als Objekte erkannt werden, wobei die in der grafischen Benutzeroberfläche (40) erkannten Informationen ebenfalls über die Datenschnittstelle (18) in das große Sprachmodell (45) mit der Maßgabe eingegeben werden, eine Handlungsoption für die Bedienung wenigstens eines Bedienelementes der grafischen Benutzeroberfläche (40) an der Datenschnittstelle (18) zu erhalten.

5. Verfahren nach einem der vorhergehenden Ansprüche, **dadurch gekennzeichnet, dass** die Testumgebung (30) wenigstens ein Testszenario (44) hat, welches ein Systemverhalten des zu testenden Computerprogramms (20) mit Bedienung wenigstens eines Bedienelementes der grafischen Benutzeroberfläche (40) beinhaltet, wobei in Abhängigkeit von dem Testszenario (44) mindestens eine Anweisung an das große Sprachmodell (45) generiert und diese ebenfalls über die Datenschnittstelle (18) in das große Sprachmodell (45) eingegeben wird, um eine Handlungsoption für die Bedienung wenigstens eines Bedienelementes der grafischen Benutzeroberfläche(40) an der Datenschnittstelle (18) zu erhalten.

6. Verfahren nach Anspruch 5, **dadurch gekennzeichnet, dass** nach dem Auslösen der simulierten Benutzereingabe ein geänderter zweiter Bilddatenstrom mit einer geänderten grafischen Benutzeroberfläche (40) bereitgestellt wird, wobei mittels der optischen Zeichenerkennung (46) Objekte in der geänderten grafischen Benutzeroberfläche (40) erkannt werden und wobei die geänderte grafische Benutzeroberfläche (40) hinsichtlich des im Testszenario (44) beschriebenen Systemverhaltens in Abhängigkeit von den erkannten Objekten verifiziert wird.

7. Verfahren nach Anspruch 5 oder 6, **dadurch gekennzeichnet, dass** die Schritte bis zur Auslösung einer simulierten Benutzereingabe mit einer geänderten grafischen Benutzeroberfläche (40) wiederholt werden, um eine weitere geänderte grafischen Benutzeroberfläche (40) zu erzeugen.

8. Verfahren nach einem der Ansprüche 5 bis 7, **dadurch gekennzeichnet, dass** mittels der optischen Zeichenerkennung (46) zunächst Zeichenketten der in der grafischen Benutzeroberfläche (40) enthaltenen Objekte erkannt, wobei anschließend die in dem Testszenario (44) das Systemverhalten beschreibenden Objekte den entsprechenden Objekten innerhalb der grafischen Benutzeroberfläche (40) in Abhängigkeit von den erkannten Zeichenketten der in der grafischen Benutzeroberfläche (40) enthaltenen Objekte zugeordnet werden.

9. Computerprogramm (20) mit Programmcodemitteln, eingerichtet zur Durchführung des Verfahrens nach einem der vorhergehenden Ansprüche, wenn das Computerprogramm (20) als Testumgebung (30) auf einer Datenverarbeitungsanlage (10) ausgeführt wird.

10. System mit einer Datenverarbeitungsanlage (10), auf der ein zu testendes Computerprogramm (20) mit einer grafischen Benutzeroberfläche (40) ausführbar ist, und mit einer Testumgebung (30) zum Testen des ausgeführten Computerprogramms (20), wobei das System zur Durchführung des Verfahrens nach einem der Ansprüche 1 bis 8 eingerichtet ist, wenn das zu testende Computerprogramm (20) auf der Datenverarbeitungsanlage (10) ausgeführt wird.
